# EUROPEAN PATENT SPECIFICATION

(11) **EP 2 870 754 B1**
(45) Date of publication and mention of the grant of the patent: **17.07.2024**
(21) Application number: 13732054.5
(22) Date of filing: 17.06.2013
(51) Int. Cl.: H04N 19/70, H04N 19/463, H04N 19/90

(54) **SEI MESSAGE INCLUDING FIXED-LENGTH CODED VIDEO PARAMETER SET ID (VPS_ID)**
SEI-NACHRICHT MIT CODIERTEM VIDEOPARAMETERSATZ-IDENTIFIKATOR (VPS_ID) MIT FIXER LÄNGE
MESSAGE SEI COMPRENANT UN ID D'ENSEMBLE DE PARAMÈTRES VIDÉO CODÉS EN LONGUEUR FIXE (VPS_ID)

(30) Priority: 09.07.2012 US 201261669556 P; 26.02.2013 US 201313777413
(43) Date of publication of application: 13.05.2015
(73) Proprietor: QUALCOMM Incorporated, San Diego, California 92121-1714 (US)
(72) Inventor: WANG, Ye-Kui, San Diego, California 92121-1714 (US); CHEN, Ying, San Diego, California 92121-1714 (US)
(74) Representative: Howe, Steven
(86) International application number: PCT/US2013/046157
(87) International publication number: WO 2014/011363

(56) References cited:
- Y-K WANG ET AL: "AHG9: Splicing-friendly coding of some parameters", 101. MPEG MEETING; 16-7-2012 - 20-7-2012; STOCKHOLM; (MOTION PICTURE EXPERT GROUP OR ISO/IEC JTC1/SC29/WG11),, no. m25430, 3 July 2012 (2012-07-03), XP030053764
- THANG (UOA) T C ET AL: "AHG9: Signaling of VPS Activation", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0261, 2 July 2012 (2012-07-02), XP030112623
- HANNUKSELA (NOKIA) M M: "AHG9/10: vps_id in slice header (partial re-proposal of JCTVC-I0524)", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0546, 13 July 2012 (2012-07-13), XP030112908
- SULLIVAN G J ET AL: "Meeting Report of 10th JCT-VC Meeting", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J1000, 13 October 2012 (2012-10-13), XP030112945

## Description

### TECHNICAL FIELD

This disclosure generally relates to processing video data and, more particularly, techniques applicable to one or more video coding standards.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, transcoders, routers or other network devices, and the like. Digital video devices implement video compression techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, proprietary standards, open video compression formats such as VP8, and extensions of such standards, techniques or formats. The video devices may transmit, receive, encode, decode, and/or store digital video information more efficiently by implementing such video compression techniques.

Video compression techniques perform spatial (intra-picture) prediction and/or temporal (inter-picture) prediction to reduce or remove redundancy inherent in video sequences. For block-based video coding, a video slice (i.e., a video frame or a portion of a video frame) may be partitioned into video blocks, which may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to a reference frames.

Spatial or temporal prediction results in a predictive block for a block to be coded. Residual data represents pixel differences between the original block to be coded and the predictive block. An inter-coded block is encoded according to a motion vector that points to a block of reference samples forming the predictive block, and the residual data indicating the difference between the coded block and the predictive block. An intra-coded block is encoded according to an intra-coding mode and the residual data. For further compression, the residual data may be transformed from the pixel domain to a transform domain, resulting in residual transform coefficients, which then may be quantized. The quantized transform coefficients, initially arranged in a two-dimensional array, may be scanned in order to produce a one-dimensional vector of transform coefficients, and entropy coding may be applied to achieve even more compression.
Y-K WANG ET AL, "AHG9: Splicing-friendly coding of some parameters", 101. MPEG MEETING; 16-7-2012 - 20-7-2012; STOCKHOLM; (MOTION PICTURE EXPERT GROUP OR ISO/IEC JTC1/SC29/WG11),, (20120703), no. m25430 proposes that all parameter set IDs are fixed-length coded and are placed before any entropy coded syntax elements in each parameter set or coded slice NAL unit. It is further proposed that the syntax elements no_output_of_prior_pics_flag and rap_pic_id are placed before any entropy-coded syntax elements in the slice header, and that the syntax element rap_pic_id is fixed-length coded. This is indicated to enable lightweight splicing of bitstreams.
THANG (UOA) T C ET AL, "AHG9: Signaling of VPS Activation", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, (20120702), no. JCTVC-J0261, XP030112623 relates to signaling of a video parameter set using additional messages. In one example, an SEI message called parameter_set_reference() is used to convey the vsp_id element.

### SUMMARY

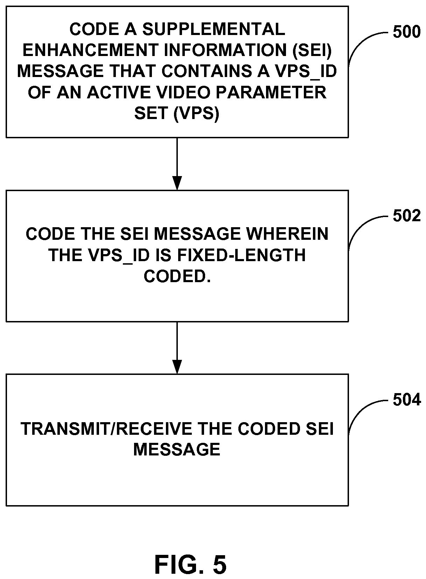

The scope of the present invention is defined by the scope of the appended claims. Any embodiments that do not fall under the scope of the claims are examples which are useful for understanding the invention, but do not form a part of the invention. In particular the invention is disclosed in figure 5, in the corresponding passages of the description and in the other passages of the description dealing with the details of including a fixed-length coded VPS identifier in a SEI message, itself included in a SEI NAL unit.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example video encoding and decoding system that may utilize the techniques described in this disclosure.
FIG. 2 is a block diagram illustrating an example video encoder that may implement the techniques described in this disclosure.
FIG. 3 is a block diagram illustrating an example video decoder that may implement the techniques described in this disclosure.
FIG. 4 is a block diagram illustrating an example set of devices that form part of a network.
FIG. 5 is a flowchart illustrating an embodiment of the present invention.
FIG. 6 is a flowchart illustrating another example method in accordance with one or more examples of this disclosure.
FIG. 7 is another flowchart illustrating an example method in accordance with one or more examples of this disclosure.
FIG. 8 is another flowchart illustrating an example method in accordance with one or more examples of this disclosure.
FIG. 9 is another flowchart illustrating an example method in accordance with one or more examples of this disclosure.
FIG. 10 is another flowchart illustrating an example method in accordance with one or more examples of this disclosure.

### DETAILED DESCRIPTION

This disclosure describes various video coding improvements. Some video coding standards are now described. Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC), including its Scalable Video Coding (SVC) and Multiview Video Coding (MVC) extensions.

In addition, there is a new video coding standard, namely High-Efficiency Video Coding (HEVC), being developed by the Joint Collaboration Team on Video Coding (JCT-VC) of ITU-T Video Coding Experts Group (VCEG) and ISO/IEC Motion Picture Experts Group (MPEG). A recent Working Draft (WD) of HEVC, and referred to as HEVC WD7 hereinafter, is available from http://phenix.int-evry.fr/ict/doc_end_user/documents/9_Geneva/wg11/JCTVC-I1003-v6.zip. HEVC WD7.

A more recent latest Working Draft (WD) of HEVC, and referred to as HEVC WD9 hereinafter, is available from http://phenix.int-evry.fr/jct/doc_end_user/documents/9_Geneva/wg11/JCTVC-I1003-v10.zip. HEVC WD9.

In an example, in accordance with the techniques of this disclosure various systems, methods, and devices may code a supplemental enhancement information (SEI) message. In some examples, the SEI message may contain an identifier of an active video parameter set (VPS), e.g., vps_id. In some examples, the identifier of the active VPS may be fixed-length coded. Additionally, the identifier of the active VPS may be coded in an early position in the SEI message, such as the first syntax element in the SEI message, before any entropy-coded, e.g. as a ue(v) coded syntax element in the SEI message, or within, for example, the first two, three, four, or five syntax elements in the SEI message. Desirably, entropy decoding is thus not needed to determine the active VPS. This may also generally allow less sophisticated devices to have access to the identifier of an active VPS without requiring a decoder.

Parameter sets will now be described. In HEVC WD7, the video, sequence, picture and adaptation parameter set mechanisms decouple the transmission of infrequently changing information from the transmission of coded block data. Video, sequence, picture, and adaptation parameter sets may, in some applications, be conveyed "out-of-band," i.e., not transported together with the units containing coded video data. Out-of-band transmission is typically reliable.

In HEVC WD7, an identifier of a VPS, sequence parameter set (SPS), picture parameter set (PPS) or adaptation parameter set (APS) is coded using 'ue(v)'. Each SPS includes an SPS identification (ID) and a VPS ID, each PPS includes a PPS ID and an SPS ID, and each slice header includes a PPS ID and possibly an APS ID. Though VPS is supported, most of the sequence level information parameters are still only present in the SPS.

VPS may generally convey high-level parameter information. For example, the VPS may specify whether inter prediction is additionally restricted for coded video sequences referring to the video parameter set. The VPS may also specify the maximum number of temporal sub-layers that may be present in the bitstream and the required size of the decoded picture buffer in units of picture storage buffers. The VPS may indicate the maximum allowed number of pictures preceding any picture in decoding order and succeeding that picture in output order and the maximum number of pictures that can precede any picture in the coded video sequence in output order and follow that picture in decoding order. The VPS may specify the number of vps_extension_data_flag syntax structures present in the video parameter set raw byte sequence payload (RBSP) and that no vps_extension_data_flag syntax elements are present in the video parameter set RBSP syntax structure.

In some cases, the vps_extension_data_flag may have any value and does not affect the conformance to profiles specified in HEVC WD9. In some examples, it may be preferable for a device to have access to such information early in the processing of a bitstream. In accordance with the techniques described herein, a coder might process this information earlier using these techniques. For example, a video encoder may encode the VPS message sooner in instances where it is fixed length and thus, not entropy coded. As another example, a video decoder may be able to complete a decode of a bitstream that includes such information sooner if it is fixed length and thus not entropy decoded. Further, less sophisticated devices, such as a Media Aware Network Element (MANE) may have access to the information without requiring a decoder since the VPS information does not need to be entropy decoded.

Random access and bitstream splicing will now be described. Random access refers to decoding a video bitstream starting from a coded picture that is not the first coded picture in the bitstream. Random access to a bitstream is needed in many video applications, such as broadcasting and streaming, e.g., for users to switch between different channels, to jump to specific parts of the video, or to switching to a different bitstream for stream adaptation (of the bit rate, frame rate, spatial resolution, and so on). This feature is enabled by inserting random access pictures or random access points, many times in regular intervals, into the video bitstream.

Bitstream splicing refers to the concatenation of two or more bitstreams or parts thereof. For example, a first bitstream may be appended to a second bitstream, possibly with some modifications to either one or both of the bitstreams to generate a spliced bitstream. The first coded picture in the second bitstream is also referred to as the splicing point. Therefore, in a concatenated bitstream, pictures before the splicing point may be from a first bitstream and pictures after the splicing point may be from a second bitstream.

Splicing of bitstreams may be performed by bitstream splicers. Bitstream splicers are often less complex and less intelligent than encoders. For example, they may not be equipped with entropy decoding and encoding capabilities.

Bitstream switching may be used in adaptive streaming environments. A bitstream switching operation at certain picture in the switch-to bitstream is effectively a bitstream splicing operation wherein the splicing point is the bitstream switching point, i.e., the first picture from the switch-to bitstream.

Random access point (RAP) pictures will now be described. Instantaneous decoding refresh (IDR) pictures as specified in AVC or HEVC can be used for random access. However, since pictures following an IDR picture in decoding order cannot use pictures decoded prior to the IDR picture as reference, bitstreams relying on IDR pictures for random access can have significantly lower coding efficiency.

To improve coding efficiency, the concept of clean random access (CRA) pictures was introduced in HEVC to allow pictures that follow a CRA picture in decoding order but precede it in output order to use pictures decoded before the CRA picture as reference. Pictures that follow a CRA picture in decoding order but precede the CRA picture in output order are referred to as leading pictures associated with the CRA picture (or leading pictures of the CRA picture). The leading pictures of a CRA picture are correctly decodable if the decoding starts from an IDR or CRA picture before the current CRA picture. However, the leading pictures of a CRA picture may be non-correctly-decodable when random access from the CRA picture occurs; hence, the leading pictures are typically discarded during random access decoding. To prevent error propagation from reference pictures that may not be available depending on where the decoding starts, all pictures that follow a CRA picture both in decoding order and output order shall not use any picture that precedes the CRA picture either in decoding order or output order (which includes the leading pictures) as reference.

The concept of broken link access (BLA) picture was further introduced in HEVC after the introduction of CRA pictures and based on the concept of CRA pictures. A BLA picture typically originates from bitstream splicing at the position of a CRA picture, and in the spliced bitstream the splicing point CRA picture is changed to a BLA picture.IDR pictures, CRA pictures and BLA pictures are collectively referred to as RAP pictures.

The most essential difference between BLA pictures and CRA pictures is as follows. For a CRA picture, the associated leading pictures are correctly decodable if the decoding starts from a RAP picture before the CRA picture in decoding order, and may be non-correctly-decodable when random access from the CRA picture occurs (i.e., when the decoding starts from the CRA picture, or in other words, when the CRA picture is the first picture in the bitstream). For a BLA picture, the associated leading pictures may be non-correctly-decodable in all cases, even when the decoding starts from a RAP picture before the BLA picture in decoding order.

For a particular CRA or BLA picture, some of the associated leading pictures are correctly decodable even when the CRA or BLA picture is the first picture in the bitstream. These leading pictures are referred to as decodable leading pictures (DLPs), and other leading pictures are referred to as non-decodable leading pictures (NLPs). NLPs are also referred to as tagged for discard (TFD) pictures in the latest HEVC draft specification.

Header parameter set (HPS) will be described.

In JCTVC-J0109 (available at http://phenix.int-evry.fr/jct/doc_end_user/documents/10_Stockholm/wg11/JCTVC-J0109-v1.zip) a header parameter set (HPS) is proposed. A majority of the syntax elements in slice header can often be predicted from HPSs. JCTVC-J0109.

Various problems will now be described.

Document JVTVC-J0216 (available at http://phenix.it-sudparis.eu/jct/doc_end_user/documents/10_Stockholm/wg11/JCTVC-J0216-v2.zip) proposes the following changes to enable detection of slice losses by parsing the slice headers only: 1) Replace current syntax element first_slice_in_pic_flag (coded with u(1)) with slice_idx_in_pic (coded with ue(v)); 2) Add a flag last_slice_in_pic_flag (coded with u(1)). JVTVC-J0216.

However, though the methods of JVTVC-J0216 may enable detection of slice losses of a picture by parsing only the slice header, it might not be possible to know which coding tree blocks are lost. This information would be helpful to enable single-pass decoding, which may be important for hardware decoder implementations, even with slice losses.

Document JCTVC-J0261 (available at http://phenix.int-evry .fr/j ct/doc_end_user/documents/10_Stockholm/wg 11 /JCT VC-J0261 -v 1. zip) proposes to indicate the active VPS in the access unit delimiter, in a new SEI message, or in the recovery point SEI message, by including a ue(v) coded vps_id, which indicates the ID of the active VPS for IDR access units. However, based on such solutions, entropy decoding is still needed to figure out the active VPS. JCTVC-J0261.

Examples related to slice loss detection will now be described. Any details of these examples may be used in any combination. In one example, the syntax element num_slices_minus1 (ue(v) coded) is signaled in the APS, or HPS. The value of num_slices_minus1 specifies the number of slices in the picture. Upon receiving all slices of the same access unit, if the number of the slices N is smaller than num_slices_minus1+1, num_slices_minus1+1-N slices are lost.

In one example, the number of coding tree blocks included in a slice is signaled in the slice header. The value 0 indicates that the picture has only one slice.

In one example, the number of coding tree blocks included in each of the slices is signaled in the APS or HPS, and the slice ID is signaled in the slice header.

In one example, the slice end address (e.g., in the unit of coding tree block) of each slice is signaled in HPS or the slice header.

In one example, when the number of coding tree blocks included in each slice is signaled, the end_of_slice_flag is not signaled, while the end of slice is inferred from the number of coding tree blocks that has been decoded being equal to the number of coding tree blocks included in the slice.

Examples of signaling active VPS will now be described. Any details of these alternatives may be used in any combination. These may also be used in any combination with one or more of the slice loss detection techniques described herein.

In one example, a new SEI message that contains only the vps_id of the active VPS, wherein the vps_id is fixed-length coded, e.g. u(5), and if an SEI NAL unit include this new SEI message, no other SEI message shall be included in the SEI NAL unit. Such an SEI NAL unit shall be included in any RAP access unit, and may be included in other access units.

In one example, the active VPS ID is repeated in the slice header of RAP pictures, fixed-length coded (e.g., u(5)), in an early position in the slice header, before any entropy-coded syntax elements. Accordingly, a video encoder may encode the VPS message sooner because it is fixed length and thus, not entropy coded. As another example, a video decoder may be able to complete a decode of a bitstream that includes such information sooner if it is fixed length and thus not entropy decoded. Further, less sophisticated devices, such as a MANE may have access to the information without requiring a decoder since the VPS information does not need to be entropy decoded.

In one example, a new NAL unit type is defined, with a length of only two bytes, the first byte is the same as other NAL unit types currently defined in HEVC WD7, and the second byte includes N bits for the active VPS ID, and 8-N reserved bits, wherein the value of 2^N shall be equal to or greater than the maximum value of APS ID plus 1. When N is equal to 8, VPS ID plus 1 is signaled in the second byte. When N is not equal to 8, the 8-N reserved bits as one value must be larger or equal to 1. In one alternative, a new NAL unit type is defined, with a length of only three bytes, and has the same NAL unit header (as current HEVC NAL units) which is 2-byte, a third byte includes N bits for the active VPS ID, and 8-N reserved bits, wherein the value of 2^N shall be equal to or greater than the maximum value of APS ID plus 1. When N is equal to 8, VPS ID plus 1 is signaled in the second byte. When N is not equal to 8, the 8-N reserved bits as one value must be larger or equal to 1.

In one example, a bit in the second byte of the NAL unit header of VPS NAL units is used to indicate the VPS is the active VPS for the access unit containing the VPS NAL unit.

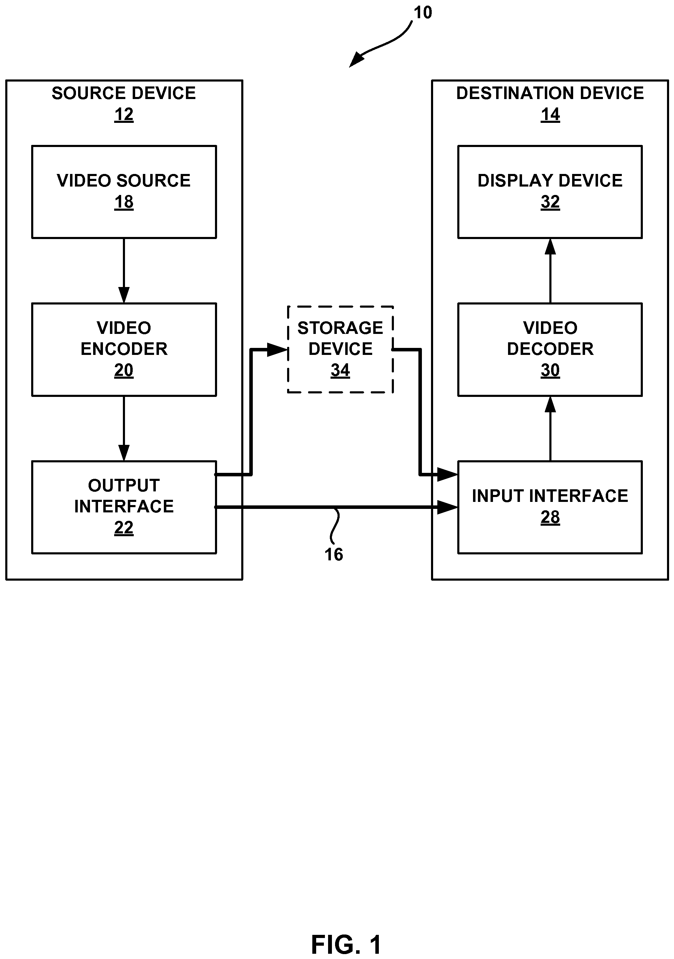

FIG. 1 is a block diagram illustrating an example video encoding and decoding system 10 that may utilize the techniques described in this disclosure. As shown in FIG. 1, system 10 includes a source device 12 that generates encoded video data to be decoded at a later time by a destination device 14. Source device 12 and destination device 14 may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming device, or the like. In some cases, source device 12 and destination device 14 may be equipped for wireless communication.

Destination device 14 may receive the encoded video data to be decoded via a link 16. Link 16 may comprise any type of medium or device capable of moving the encoded video data from source device 12 to destination device 14. In one example, link 16 may comprise a communication medium to enable source device 12 to transmit encoded video data directly to destination device 14 in real-time. The encoded video data may be modulated according to a communication standard, such as a wireless communication protocol, and transmitted to destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 12 to destination device 14.

Alternatively, encoded data may be output from output interface 22 to a storage device 34. Similarly, encoded data may be accessed from storage device 34 by input interface. Storage device 34 may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, storage device 34 may correspond to a file server or another intermediate storage device that may hold the encoded video generated by source device 12. Destination device 14 may access stored video data from storage device 34 via streaming or download. The file server may be any type of server capable of storing encoded video data and transmitting that encoded video data to the destination device 14. Example file servers include a web server (e.g., for a website), an FTP server, network attached storage (NAS) devices, or a local disk drive. Destination device 14 may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from storage device 34 may be a streaming transmission, a download transmission, or a combination of both.

The techniques of this disclosure are not necessarily limited to wireless applications or settings. The techniques may be applied to video coding in support of any of a variety of multimedia applications, such as over-the-air television broadcasts, cable television transmissions, satellite television transmissions, streaming video transmissions, e.g., via the Internet, encoding of digital video for storage on a data storage medium, decoding of digital video stored on a data storage medium, or other applications. In some examples, system 10 may be configured to support one-way or two-way video transmission to support applications such as video streaming, video playback, video broadcasting, and/or video telephony.

In the example of FIG. 1, source device 12 includes a video source 18, video encoder 20 and an output interface 22. In some cases, output interface 22 may include a modulator/demodulator (modem) and/or a transmitter. In source device 12, video source 18 may include a source such as a video capture device, e.g., a video camera, a video archive containing previously captured video, a video feed interface to receive video from a video content provider, and/or a computer graphics system for generating computer graphics data as the source video, or a combination of such sources. As one example, if video source 18 is a video camera, source device 12 and destination device 14 may form so-called camera phones or video phones. However, the techniques described in this disclosure may be applicable to video coding in general, and may be applied to wireless and/or wired applications.

The captured, pre-captured, or computer-generated video may be encoded by video encoder 20. The encoded video data may be transmitted directly to destination device 14 via output interface 22 of source device 12. The encoded video data may also (or alternatively) be stored onto storage device 34 for later access by destination device 14 or other devices, for decoding and/or playback.

In an example, a device such as source device 12 or destination device 14 may code an SEI message. The SEI message may contain a vps_id of an active VPS. Additionally, the vps_id may be fixed-length coded. For example, source device 12 may encode a fixed length coded SEI message that contains a vps_id of an active VPS. Similarly, destination device 14 may decode the fixed-length coded SEI message that may contain the vps_id of an active VPS.

In accordance with an example of this disclosure signaling of active video parameter set ID using fixed length coding in an SEI message may be performed by a video coder, such as a video encoder 20 or a video decoder 30. More specifically, in some examples, video encoder 20 may include an encapsulation unit, an SEI message generation unit, or other unit that may generate the SEI message. Other video encoders 20 may use an entropy encoder in a bypass mode, during which the entropy decoder performs non-entropy encoding. The entropy decoder may generate the SEI message.

Using an SEI message that contains a vps_id of an active VPS and is fixed-length coded may allow source device 12 to communicate the active VPS such that other devices in system 10, such as destination device 14, have information regarding which VPS is the active VPS. It may be important to get this information to devices in system 10 to provide these devices with the "big picture" regarding communications from source device 12. Providing destination device 14 with the VPS more quickly may allow the destination device 14 to have data about, for example, how many layers and how many views there are for a picture.

As discussed above, VPS may generally provide high level parameter information. The VPS may specify (1) if inter prediction is additionally restricted for coded video sequences referring to the video parameter set, (2) the maximum number of temporal sub-layers that may be present in the bitstream, (3) the required size of the decoded picture buffer in units of picture storage buffers, (4) the maximum allowed number of pictures preceding any picture in decoding order, (5) the maximum allowed number of pictures succeeding that picture in output order, (6) the maximum number of pictures that can precede any picture in the coded video sequence in output order, (7) the maximum number of pictures that can follow that picture in decoding order, (8) the number of vps_extension_data_flag syntax structures present in the video parameter set raw byte sequence payload (RBSP), and (9) that no vps_extension_data_flag syntax elements are present in the video parameter set RBSP syntax structure. Other high level parameter information might also be included in the VPS.

Destination device 14 includes an input interface 28, a video decoder 30, and a display device 32. In some cases, input interface 28 may include a receiver and/or a modem. Input interface 28 of destination device 14 receives the encoded video data over link 16. The encoded video data communicated over link 16, or provided on storage device 34, may include a variety of syntax elements generated by video encoder 20 for use by a video decoder, such as video decoder 30, in decoding the video data. Such syntax elements may be included with the encoded video data transmitted on a communication medium, stored on a storage medium, or stored a file server.

Video decoder 30 may decode an SEI message that contains a vps_id of an active VPS. The vps_id may be fixed-length coded. Additionally, the SEI message might contain only the vps_id of the VPS. In some examples, video decoder 30 may include an decapsulation unit, a SEI message parsing unit, or other unit that may process or parse the SEI message. Other video decoders 30 may use an entropy decoder in a bypass mode, during which the entropy decoder performs non-entropy decoding, to process the SEI message. Using an SEI message that contains a vps_id of an active VPS and is fixed-length coded may allow destination device 14 to have information regarding which VPS is the active VPS. As described herein, example destination devices 14 may receive an SEI message to indicate which VPS is active. In some examples, the destination device 14 might receive such a message at most, once per coder video sequence, or however often such a message is transmitted by source device 12.

An example system 10 may use a fixed-length coded SEI message such that less complex or less intelligent devices, such as Media-Aware Network Elements (MANEs) may access the information. For example, by using a fixed length some examples may not need to entropy decode received data to access the active video parameter set ID. In another example, a NAL type may contain only the active video parameter set ID information in a header.

Some examples may include display device 32. Display device 32 may be integrated with, or external to, destination device 14. In some examples, destination device 14 may include an integrated display device and also be configured to interface with an external display device. In other examples, destination device 14 may be a display device. In general, display device 32 displays the decoded video data to a user, and may comprise any of a variety of display devices such as a liquid crystal display (LCD), a plasma display, an organic light emitting diode (OLED) display, or another type of display device.

As described herein, video encoder 20 and video decoder 30 may code an SEI message that may contain a vps_id of an active VPS and the vps_id may be fixed-length coded. Video encoder 20 and video decoder 30 may operate according to a video compression standard, such as the High Efficiency Video Coding (HEVC) standard presently under development, and may conform to the HEVC Test Model (HM). A recent draft of HEVC is available, as of July 9, 2012, from http://wg11.sc29.org/jct/doc_end_user/current_document.php?id=5885/JCTVC-I1003-v5. Alternatively, video encoder 20 and video decoder 30 may operate according to other proprietary or industry standards, such as the ITU-T H.264 standard, alternatively referred to as MPEG-4, Part 10, Advanced Video Coding (AVC), or extensions of such standards. The techniques of this disclosure, however, are not limited to any particular coding standard. Other examples of video compression standards include MPEG-2 and ITU-T H.263, as well as open formats such as VP8.

In some examples, an SEI network abstraction layer (NAL) unit may include the SEI message. In some examples, no other SEI messages are included in the SEI NAL unit. SEI NAL units may also be included in all RAP access units of the video data, and may be included in other types of access units. For example, a new SEI message that contains only the vps_id of the active VPS may be used. The vps_id may be a fixed-length coded, e.g. u(5), and if an SEI NAL unit include this new SEI message. In an example, no other SEI message may be included in the SEI NAL unit. Such an SEI NAL unit may be included in any RAP access unit, and may be included in other access units.

Although not shown in FIG. 1, in some aspects, video encoder 20 and video decoder 30 may each be integrated with an audio encoder and decoder, and may include appropriate MUX-DEMUX units, or other hardware and software, to handle encoding of both audio and video in a common data stream or separate data streams. If applicable, in some examples, MUX-DEMUX units may conform to the ITU H.223 multiplexer protocol, or other protocols such as the user datagram protocol (UDP).

As described herein, video encoder 20 in source device 12 may perform the encoding of an SEI message that may contain a vps_id of an active VPS and the vps_id may be fixed-length coded. Additionally, video decoder 30 in destination device 14 may decode the SEI message that may contain a vps_id of an active VPS and the vps_id may be fixed-length coded. Video encoder 20 and video decoder 30 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 20 and video decoder 30 may be included in one or more encoders or decoders, either of which may be integrated as part of a combined encoder/decoder (CODEC) in a respective device.

In general, a TU is used for the transform and quantization processes. A given CU having one or more PUs may also include one or more transform units (TUs). Following prediction, video encoder 20 may calculate residual values corresponding to the PU. The residual values comprise pixel difference values that may be transformed into transform coefficients, quantized, and scanned using the TUs to produce serialized transform coefficients for entropy coding. This disclosure typically uses the term "video block" to refer to a coding node of a CU. In some specific cases, this disclosure may also use the term "video block" to refer to a treeblock, i.e., LCU, or a CU, which includes a coding node and PUs and TUs.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the respective slice. Video encoder 20 typically operates on video blocks within individual video slices in order to encode the video data. A video block may correspond to a coding node within a CU. The video blocks may have fixed or varying sizes, and may differ in size according to a specified coding standard.

As an example, the HM supports prediction in various PU sizes. Assuming that the size of a particular CU is 2Nx2N, the HM supports intra-prediction in PU sizes of 2Nx2N or NxN, and inter-prediction in symmetric PU sizes of 2Nx2N, 2NxN, Nx2N, or NxN. The HM also supports asymmetric partitioning for inter-pr routing devices 104, transcoding device 106, and client device 108 ediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up," "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks need not necessarily have the same number of pixels in the horizontal direction as in the vertical direction. For example, blocks may comprise NxM pixels, where M is not necessarily equal to N.

Following intra-predictive or inter-predictive coding using the PUs of a CU, video encoder 20 may calculate residual data for the TUs of the CU. The PUs may comprise pixel data in the spatial domain (also referred to as the pixel domain) and the TUs may comprise coefficients in the transform domain following application of a transform, e.g., a discrete cosine transform (DCT), an integer transform, a wavelet transform, or a conceptually similar transform to residual video data. The residual data may correspond to pixel differences between pixels of the unencoded picture and prediction values corresponding to the PUs. Video encoder 20 may form the TUs including the residual data for the CU, and then transform the TUs to produce transform coefficients for the CU.

Following any transforms to produce transform coefficients, video encoder 20 may perform quantization of the transform coefficients. Quantization generally refers to a process in which transform coefficients are quantized to possibly reduce the amount of data used to represent the coefficients, providing further compression. The quantization process may reduce the bit depth associated with some or all of the coefficients. For example, an *n*-bit value may be rounded down to an *m*-bit value during quantization, where *n* is greater than *m.*

In some examples, video encoder 20 may utilize a predefined scan order to scan the quantized transform coefficients to produce a serialized vector that can be entropy encoded. In other examples, video encoder 20 may perform an adaptive scan. After scanning the quantized transform coefficients to form a one-dimensional vector, video encoder 20 may entropy encode the one-dimensional vector, e.g., according to context adaptive variable length coding (CAVLC), context adaptive binary arithmetic coding (CABAC), syntax-based context-adaptive binary arithmetic coding (SBAC), Probability Interval Partitioning Entropy (PIPE) coding or another entropy encoding methodology. Video encoder 20 may also entropy encode syntax elements associated with the encoded video data for use by video decoder 30 in decoding the video data.

To perform CABAC, video encoder 20 may assign a context within a context model to a symbol to be transmitted. The context may relate to, for example, whether neighboring values of the symbol are non-zero or not. To perform CAVLC, video encoder 20 may select a variable length code for a symbol to be transmitted. Codewords in VLC may be constructed such that relatively shorter codes correspond to more probable symbols, while longer codes correspond to less probable symbols. In this way, the use of VLC may achieve a bit savings over, for example, using equal-length codewords for each symbol to be transmitted. The probability determination may be based on a context assigned to the symbol.

As described herein, video encoder 20 and video decoder 30 may also code SEI messages that contain the vps_id of the active VPS. The vps_id may be fixed-length coded. Video encoder 20 may encode a fixed length SEI message that contains a vps_id of an active VPS. Video decoder 30 may decode the SEI message that contains a vps_id of an active VPS. Using an SEI message that contains a vps_id of an active VPS and is fixed-length coded may allow destination device 14 to have information regarding which VPS is the active VPS. This may provide for the maximum number of temporal sub-layers that may be present in the bitstream or the required size of the decoded picture buffer in units of picture storage buffers, to name just a few.

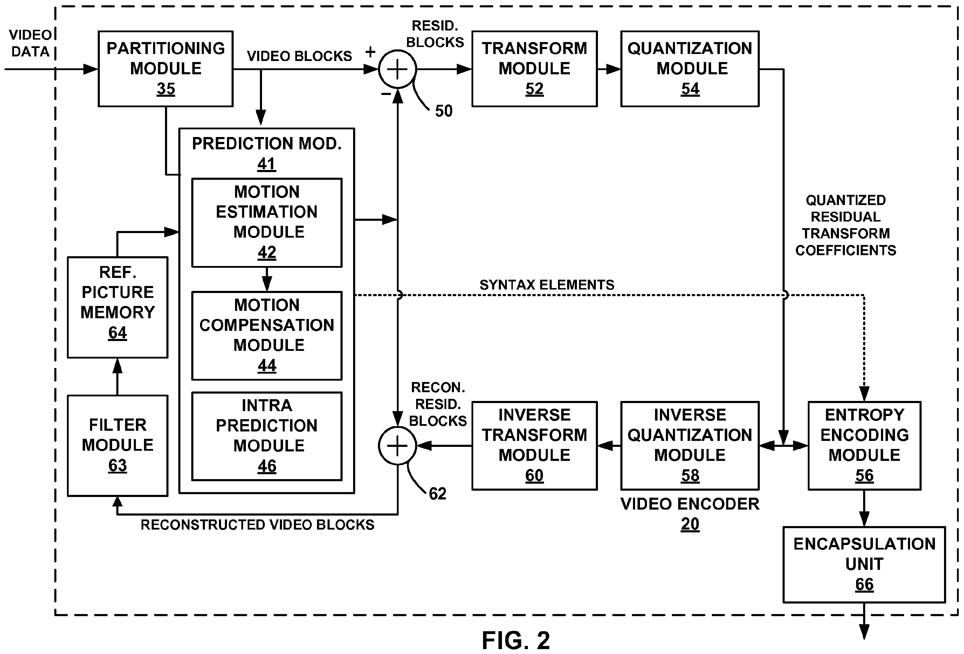

FIG. 2 is a block diagram illustrating an example video encoder 20 that may implement the techniques described in this disclosure. In an example, video encoder 20 encodes an SEI message that may contain a vps_id of an active VPS. The vps_id may be fixed-length coded. In the illustrated example of FIG. 2 video encoder 20 includes an encapsulation unit 66 that generates the SEI message. In accordance with an example of this disclosure signaling of active video parameter set ID using fixed length coding in an SEI message may be performed by encapsulation unit 66. Encapsulation unit 66 of video encoder 20 may encode an SEI message that contains a vps_id of an active VPS. Additionally, the vps_id may be fixed-length coded. Using an SEI message that contains a vps_id of an active VPS and is fixed-length coded may allow source device 12 to communicate the active VPS such that other devices in system 10, such as destination device 14, have information regarding which VPS is the active VPS.

In some examples, entropy encoder 56 may encode an SEI message that may contain a vps_id of an active VPS and may be fixed-length coded. The entropy decoder may function in a bypass mode, during which the entropy decoder performs non-entropy encoding and generate the SEI message rather than encapsulation unit 66.

In other examples, encapsulation unit or some other unit may follow entropy encoding module 56. For example, the SEI message may contain a vps_id of an active VPS and may be fixed-length coded may be encoded by the encapsulation unit or other unit that follows the entropy encoder. Using fixed-length coding may allow the encapsulation unit 66 or other unit generating the SEI message that contains a vps_id to perform this function earlier in the outgoing bitstream since entropy encoding may generally not be needed.

Video encoder 20 may perform other decoder functionality. For example, video encoder 20 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based compression modes. Inter-modes, such as uni-directional prediction (P mode) or bi-prediction (B mode), may refer to any of several temporal-based compression modes. Accordingly, video encoder 20 may code an SEI message that may contain a vps_id of an active VPS and the vps_id may be fixed-length coded, as well as perform intra- and inter-coding of video blocks within video slices.

In the example of FIG. 2, video encoder 20 includes a partitioning module 35, prediction processing unit 41, filter module 63, reference picture memory 64, summer 50, transform module 52, quantization module 54, and entropy encoding module 56. Prediction processing unit 41 includes motion estimation module 42, motion compensation module 44, and intra prediction processing unit 46. For video block reconstruction, video encoder 20 also includes inverse quantization module 58, inverse transform processing unit 60, and summer 62. Filter module 63 is intended to represent one or more loop filters such as a deblocking filter, an adaptive loop filter (ALF), and a sample adaptive offset (SAO) filter. Although filter module 63 is shown in FIG. 2 as being an in loop filter, in other configurations, filter module 63 may be implemented as a post loop filter.

As shown in FIG. 2, video encoder 20 receives video data, and partitioning module 35 partitions the data into video blocks. This partitioning may also include partitioning into slices, tiles, or other larger units, as wells as video block partitioning, e.g., according to a quadtree structure of LCUs and CUs. Video encoder 20 generally illustrates the components that encode video blocks within a video slice to be encoded. The slice may be divided into multiple video blocks (and possibly into sets of video blocks referred to as tiles). Prediction processing unit 41 may select one of a plurality of possible coding modes, such as one of a plurality of intra coding modes or one of a plurality of inter coding modes, for the current video block based on error results (e.g., coding rate and the level of distortion). Prediction processing unit 41 may provide the resulting intra- or inter-coded block to summer 50 to generate residual block data and to summer 62 to reconstruct the encoded block for use as a reference picture.

Intra prediction processing unit 46 within prediction processing unit 41 may perform intra-predictive coding of the current video block relative to one or more neighboring blocks in the same frame or slice as the current block to be coded to provide spatial compression. Motion estimation module 42 and motion compensation module 44 within prediction processing unit 41 perform inter-predictive coding of the current video block relative to one or more predictive blocks in one or more reference pictures to provide temporal compression.

Motion estimation module 42 may be configured to determine the inter-prediction mode for a video slice according to a predetermined pattern for a video sequence. The predetermined pattern may designate video slices in the sequence as P slices, B slices or GPB slices. Motion estimation module 42 and motion compensation module 44 may be highly integrated, but are illustrated separately for conceptual purposes. Motion estimation, performed by motion estimation module 42, is the process of generating motion vectors, which estimate motion for video blocks. A motion vector, for example, may indicate the displacement of a PU of a video block within a current video frame or picture relative to a predictive block within a reference picture.

A predictive block is a block that is found to closely match the PU of the video block to be coded in terms of pixel difference, which may be determined by sum of absolute difference (SAD), sum of square difference (SSD), or other difference metrics. In some examples, video encoder 20 may calculate values for sub-integer pixel positions of reference pictures stored in reference picture memory 64. For example, video encoder 20 may interpolate values of one-quarter pixel positions, one-eighth pixel positions, or other fractional pixel positions of the reference picture. Therefore, motion estimation module 42 may perform a motion search relative to the full pixel positions and fractional pixel positions and output a motion vector with fractional pixel precision.

Motion estimation module 42 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in reference picture memory 64. Motion estimation module 42 sends the calculated motion vector to entropy encoding module 56 and motion compensation module 44.

Motion compensation, performed by motion compensation module 44, may involve fetching or generating the predictive block based on the motion vector determined by motion estimation, possibly performing interpolations to sub-pixel precision. Upon receiving the motion vector for the PU of the current video block, motion compensation module 44 may locate the predictive block to which the motion vector points in one of the reference picture lists. Video encoder 20 forms a residual video block by subtracting pixel values of the predictive block from the pixel values of the current video block being coded, forming pixel difference values. The pixel difference values form residual data for the block, and may include both luma and chroma difference components. Summer 50 represents the component or components that perform this subtraction operation. Motion compensation module 44 may also generate syntax elements associated with the video blocks and the video slice for use by video decoder 30 in decoding the video blocks of the video slice.

Intra-prediction processing unit 46 may intra-predict a current block, as an alternative to the inter-prediction performed by motion estimation module 42 and motion compensation module 44, as described above. In particular, intra-prediction processing unit 46 may determine an intra-prediction mode to use to encode a current block. In some examples, intra-prediction processing unit 46 may encode a current block using various intra-prediction modes, e.g., during separate encoding passes, and intra-prediction processing unit 46 (or mode select module 40, in some examples) may select an appropriate intra-prediction mode to use from the tested modes. For example, intra-prediction processing unit 46 may calculate rate-distortion values using a rate-distortion analysis for the various tested intra-prediction modes, and select the intra-prediction mode having the best rate-distortion characteristics among the tested modes. Rate-distortion analysis generally determines an amount of distortion (or error) between an encoded block and an original, unencoded block that was encoded to produce the encoded block, as well as a bit rate (that is, a number of bits) used to produce the encoded block. Intra-prediction processing unit 46 may calculate ratios from the distortions and rates for the various encoded blocks to determine which intra-prediction mode exhibits the best rate-distortion value for the block.

In any case, after selecting an intra-prediction mode for a block, intra-prediction processing unit 46 may provide information indicative of the selected intra-prediction mode for the block to entropy encoding module 56. Entropy encoding module 56 may encode the information indicating the selected intra-prediction mode in accordance with the techniques of this disclosure. Video encoder 20 may include in the transmitted bitstream configuration data, which may include a plurality of intra-prediction mode index tables and a plurality of modified intra-prediction mode index tables (also referred to as codeword mapping tables), definitions of encoding contexts for various blocks, and indications of a most probable intra-prediction mode, an intra-prediction mode index table, and a modified intra-prediction mode index table to use for each of the contexts.

After prediction processing unit 41 generates the predictive block for the current video block via either inter-prediction or intra-prediction, video encoder 20 forms a residual video block by subtracting the predictive block from the current video block. The residual video data in the residual block may be included in one or more TUs and applied to transform processing unit 52. Transform processing unit 52 transforms the residual video data into residual transform coefficients using a transform, such as a discrete cosine transform (DCT) or a conceptually similar transform. Transform processing unit 52 may convert the residual video data from a pixel domain to a transform domain, such as a frequency domain.

Transform processing unit 52 may send the resulting transform coefficients to quantization module 54. Quantization module 54 quantizes the transform coefficients to further reduce bit rate. The quantization process may reduce the bit depth associated with some or all of the coefficients. The degree of quantization may be modified by adjusting a quantization parameter. In some examples, quantization module 54 may then perform a scan of the matrix including the quantized transform coefficients. Alternatively, entropy encoding module 56 may perform the scan.

Following quantization, entropy encoding module 56 entropy encodes the quantized transform coefficients. For example, entropy encoding module 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy encoding methodology or technique. Following the entropy encoding by entropy encoding module 56, the encoded bitstream may be transmitted to video decoder 30, or archived for later transmission or retrieval by video decoder 30. Entropy encoding module 56 may also entropy encode the motion vectors and the other syntax elements for the current video slice being coded.

Inverse quantization module 58 and inverse transform processing unit 60 apply inverse quantization and inverse transformation, respectively, to reconstruct the residual block in the pixel domain for later use as a reference block of a reference picture. Motion compensation module 44 may calculate a reference block by adding the residual block to a predictive block of one of the reference pictures within one of the reference picture lists. Motion compensation module 44 may also apply one or more interpolation filters to the reconstructed residual block to calculate sub-integer pixel values for use in motion estimation. Summer 62 adds the reconstructed residual block to the motion compensated prediction block produced by motion compensation module 44 to produce a reference block for storage in reference picture memory 64. The reference block may be used by motion estimation module 42 and motion compensation module 44 as a reference block to inter-predict a block in a subsequent video frame or picture.

As discussed above, video encoder 20 of FIG. 2 represents an example of a video encoder configured to implement on or more of the techniques described herein. In an example, video encoder 20 may code an SEI message. For example, encapsulation unit 66 may code an SEI message. The SEI message may contain a vps_id of an active VPS. Additionally, the vps_id may be fixed-length coded. In other examples, entropy encoding module 56 may encode the SEI message that may contain a vps_id of an active VPS that may be fixed-length coded.

In accordance with an example of this disclosure signaling of active video parameter set ID using fixed length coding in an SEI message may be performed by one or more components in video encoder 20, such as encapsulation unit 66, entropy encoding module 56, or some other unit. In some video encoders, a group of units might be used. For example, one unit may when an SEI message is generated and another unit might generate the SEI message.

In an example encoder 20, generation of a fixed length SEI message that contains a vps_id of an active VPS may allow the video encoder to communicate the active VPS such that the other devices in system 10 have information regarding which VPS is the active VPS. For example, as illustrated in FIG. 1, destination device 14 may receive information regarding which VPS is the active VPS

As described herein, an example system may use a fixed length such that less complex or less intelligent systems may access the information. For example, by using a fixed length some examples may not need to entropy decode received data to access the active video parameter set ID. In another example, a NAL type may contain only the active video parameter set ID information in a header.

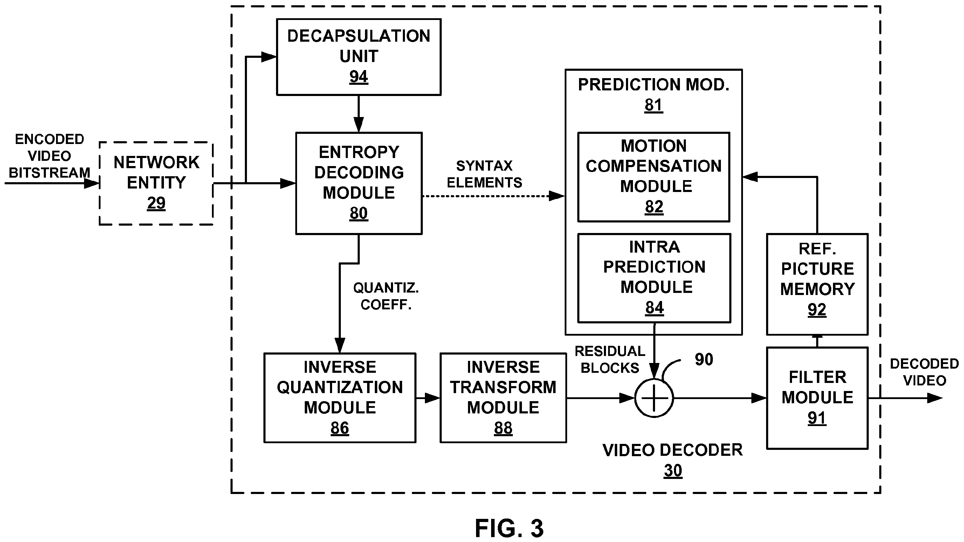

FIG. 3 is a block diagram illustrating an example video decoder 30 that may implement the techniques of this disclosure. In an example, video decoder 30 decodes an SEI message. The SEI message may contain a vps_id of an active VPS. The vps_id may be fixed-length coded. In the illustrated example of FIG. 3 video decoder 30 includes a decapsulation unit 94 that processes or parses the SEI message. In accordance with an example of this disclosure processing of active video parameter set ID using fixed length coding in an SEI message may be performed by decapsulation unit 94. Decapsulation unit 94 of video decoder 30 may decode an SEI message that contains a vps_id of an active VPS. Additionally, the vps_id may be fixed-length coded. Using an SEI message that contains a vps_id of an active VPS and is fixed-length coded may provide destination device 14 with information regarding which VPS is the active VPS.

In some examples, entropy decoding module 80 may decode an SEI message that may contain a vps_id of an active VPS and may be fixed-length coded. The entropy decoding module 80 may function in a bypass mode, during which the entropy decoding module 80 performs non-entropy decoding and decodes the SEI message rather than decapsulation unit 94. In other example video decoders, an SEI message may be decoded by some unit that precedes the entropy decoding module.

In other examples, decapsulation unit 94 or some other unit may preceed entropy decoding module 80. For example, the SEI message may contain a vps_id of an active VPS and may be fixed-length coded may be decoded by the decapsulation unit 94 or other unit that precedes the entropy decoding module 80.

In the example of FIG. 3, video decoder 30 includes an entropy decoding module 80, prediction processing unit 81, inverse quantization module 86, inverse transformation module 88, summer 90, filter module 91, and reference picture memory 92. Prediction processing unit 81 includes motion compensation module 82 and intra prediction processing unit 84. Video decoder 30 may, in some examples, perform a decoding pass generally reciprocal to the encoding pass described with respect to video encoder 20 from FIG. 2.

During the decoding process, video decoder 30 receives an encoded video bitstream that represents video blocks of an encoded video slice and associated syntax elements from video encoder 20. Video decoder 30 may receive the encoded video bitstream from a network entity 29. Network entity 29 may, for example, be a server, a media-aware network element (MANE), a video editor/splicer, or other such device configured to implement one or more of the techniques described above. As described above, some of the techniques described in this disclosure may be implemented by network entity 29 prior to network entity 29 transmitting the encoded video bitstream to video decoder 30. In some video decoding systems, network entity 29 and video decoder 30 may be parts of separate devices, while in other instances, the functionality described with respect to network entity 29 may be performed by the same device that comprises video decoder 30.

In accordance with an example of this disclosure, network entity 29 may process or parses an SEI message. For example, a network entity 29 may be a MANE that processes SEI messages. The SEI message may contain a vps_id of an active VPS. Additionally, the vps_id may be fixed-length coded. Using an SEI message that contains a vps_id of an active VPS and is fixed-length coded may provide destination device 14 with information regarding which VPS is the active VPS to the network entity 29, which may be a device that does not include a video decoder. Accordingly, this may allow network device 29, such as a MANE, a video editor/splicer, or other such device to have access to VPS information.

Accordingly, as described with respect to network entity 29, an example encoder 20 may use a fixed length such that a transmitted signal may be received and processed by a less complex or less intelligent device, e.g., network entity 29, so that the less complex or less intelligent device may access the VPS information encoded within the bitstream by video encoder 20. For example, video encoder 20, through encapsulation unit 66, entropy encoding module 56, or some other unit may fixed-length code the SEI message such that some example devices may not need to entropy decode received data to access the active video parameter set ID. Accordingly, a device that does not include an entropy decoder may process the SEI message containing the vps_id. In accordance with the techniques of this disclosure, network entity 29, e.g., MANE, may be able to decode the SEI message without doing a full decode, e.g., possibly without entropy decoding. Because the network entity 29 may be able to decode the SEI message without doing a full decode it might also make downstream media distribution choices based on the VPS in the SEI message, without needing to fully decode the bitstream itself.

Entropy decoding module 80 of video decoder 30 entropy decodes the bitstream to generate quantized coefficients, motion vectors, and other syntax elements. Entropy decoding module 80 forwards the motion vectors and other syntax elements to prediction processing unit 81. Video decoder 30 may receive the syntax elements at the video slice level and/or the video block level.

When the video slice is coded as an intra-coded (I) slice, intra prediction processing unit 84 of prediction processing unit 81 may generate prediction data for a video block of the current video slice based on a signaled intra prediction mode and data from previously decoded blocks of the current frame or picture. When the video frame is coded as an inter-coded (i.e., B, P or GPB) slice, motion compensation module 82 of prediction processing unit 81 produces predictive blocks for a video block of the current video slice based on the motion vectors and other syntax elements received from entropy decoding module 80. The predictive blocks may be produced from one of the reference pictures within one of the reference picture lists. Video decoder 30 may construct the reference frame lists, List 0 and List 1, using default construction techniques based on reference pictures stored in reference picture memory 92.

Motion compensation module 82 determines prediction information for a video block of the current video slice by parsing the motion vectors and other syntax elements, and uses the prediction information to produce the predictive blocks for the current video block being decoded. For example, motion compensation module 82 uses some of the received syntax elements to determine a prediction mode (e.g., intra- or inter-prediction) used to code the video blocks of the video slice. An inter-prediction slice type (e.g., B slice, P slice, or GPB slice), construction information for one or more of the reference picture lists for the slice, motion vectors for each inter-encoded video block of the slice, inter-prediction status for each inter-coded video block of the slice, and other information to decode the video blocks in the current video slice.

Motion compensation module 82 may also perform interpolation based on interpolation filters. Motion compensation module 82 may use interpolation filters as used by video encoder 20 during encoding of the video blocks to calculate interpolated values for sub-integer pixels of reference blocks. In this case, motion compensation module 82 may determine the interpolation filters used by video encoder 20 from the received syntax elements and use the interpolation filters to produce predictive blocks.

Inverse quantization module 86 inverse quantizes, i.e., de-quantizes, the quantized transform coefficients provided in the bitstream and decoded by entropy decoding module 80. The inverse quantization process may include use of a quantization parameter calculated by video encoder 20 for each video block in the video slice to determine a degree of quantization and, likewise, a degree of inverse quantization that should be applied. Inverse transform processing unit 88 applies an inverse transform, e.g., an inverse DCT, an inverse integer transform, or a conceptually similar inverse transform process, to the transform coefficients in order to produce residual blocks in the pixel domain.

After motion compensation module 82 generates the predictive block for the current video block based on the motion vectors and other syntax elements, video decoder 30 forms a decoded video block by summing the residual blocks from inverse transform processing unit 88 with the corresponding predictive blocks generated by motion compensation module 82. Summer 90 represents the component or components that perform this summation operation. If desired, loop filters (either in the coding loop or after the coding loop) may also be used to smooth pixel transitions, or otherwise improve the video quality. Filter module 91 is intended to represent one or more loop filters such as a deblocking filter, an adaptive loop filter (ALF), and a sample adaptive offset (SAO) filter. Although filter module 91 is shown in FIG. 3 as being an in loop filter, in other configurations, filter module 91 may be implemented as a post loop filter. The decoded video blocks in a given frame or picture are then stored in reference picture memory 92, which stores reference pictures used for subsequent motion compensation. Reference picture memory 92 also stores decoded video for later presentation on a display device, such as display device 32 of FIG. 1.

Video decoder 30 of FIG. 3 represents an example of a video decoder configured to implement on or more of the techniques described herein. Various example methods may code an SEI message that contains only a vps_id of an active VPS, wherein the vps_id is fixed-length coded, wherein when an SEI NAL unit includes the SEI message, and wherein no other SEI messages are included in the SEI NAL unit. For example, a video decoder 30 may code an SEI message. The SEI message may contain a vps_id of an active VPS. Additionally, the vps_id may be fixed-length coded. In an example, SEI NAL units are included in all RAP access units of the video data, and may be included in other types of access units.

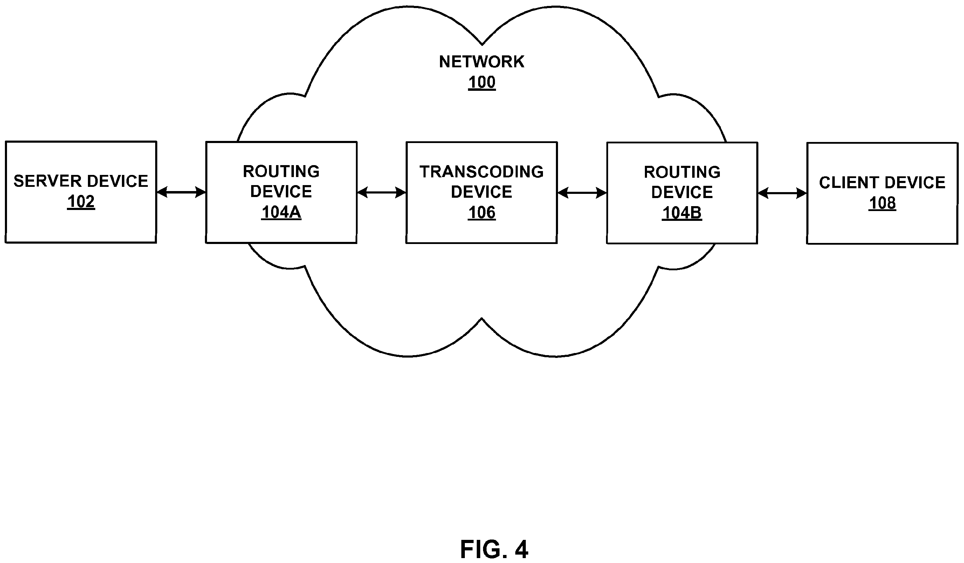

FIG. 4 is a block diagram illustrating an example set of devices that form part of network 100. In this example, network 100 includes routing devices 104A, 104B (routing devices 104) and transcoding device 106. Routing devices 104 and transcoding device 106 are intended to represent a small number of devices that may form part of network 100. Other network devices, such as switches, hubs, gateways, firewalls, bridges, and other such devices may also be included within network 100. Moreover, additional network devices may be provided along a network path between server device 102 and client device 108. Server device 102 may correspond to source device 12 (FIG. 1), while client device 108 may correspond to destination device 14 (FIG. 1), in some examples.

In general, routing devices 104 implement one or more routing protocols to exchange network data through network 100. In some examples, routing devices 104 may be configured to perform proxy or cache operations. Therefore, in some examples, routing devices 104 may be referred to as proxy devices. In general, routing devices 104 execute routing protocols to discover routes through network 100. By executing such routing protocols, routing device 104B may discover a network route from itself to server device 102 via routing device 104A.

The techniques of this disclosure may be implemented by network devices such as routing devices 104 and transcoding device 106, but also may be implemented by client device 108. In this manner, routing devices 104, transcoding device 106, and client device 108 represent examples of devices configured to perform the techniques of this disclosure, including techniques recited in the CLAIMS portion of this disclosure. Moreover, the devices of FIG. 1, and encoder shown in FIG. 2 and the decoder shown in FIG. 3 are also exemplary devices that can be configured to perform the techniques of this disclosure, including techniques recited in the CLAIMS portion of this disclosure. For example, network devices such as routing devices 104, transcoding device 106, and client device 108 may code an SEI message. The SEI message may contain a vps_id of an active VPS. Additionally, the vps_id may be fixed-length coded. For example, routing devices 104, transcoding device 106, and client device 108 may encode the SEI message that may contain a vps_id of an active VPS and the vps_id may be fixed-length coded. In some source devices 12, video encoder 20 may perform the encoding. In another example, routing devices 104, transcoding device 106, and client device 108 may decode an SEI message that may contain a vps_id of an active VPS and the vps_id may be fixed-length coded.

In accordance with an example of this disclosure, routing devices 104, transcoding device 106, and client device 108 might encode or decode video data and other messages, such as an SEI message. Generally, routing devices 104 may comprise a MANE, while transcoding device 106 and client device 108 may generally include a coder. For example, transcoding device 106 may decode a bitstream, transcode it and encode the resulting transcoded bitstream. As another example, generally client device 108 may decode a bitstream that might include video that may then be viewed at or near the client device.

In some examples, these devices (generally, routing device 104) may not fully decode all messages or video data. For example, routing device 104 may receive a bit stream and process or parses an SEI message within it. For example, if routing device 104 is a MANE it may, in some examples, processes SEI messages without fully decoding them. The SEI message may contain a vps_id of an active VPS which the devices may be able to process or parse without decoding the entire bitstream. This may allow the routing device 104 to, for example, route bit streams to different client devices 108. This may be done for various reasons; for example, different client devices might be providing different video data or different video quality to end users. Accordingly, different bitstreams may be directed to these client devices 108. By encoding the SEI message with a vps_id using fixed length coding, a MANE may have access to this information.

Accordingly, as described with respect to network entity 29 above, routing devices 104, transcoding device 106, and client device 108 may be less complex or less intelligent devices that may access the VPS information encoded within the bitstream by video encoder 20, e.g., through encapsulation unit 66, entropy encoding module 56, or some other unit may fixed-length code the SEI message. Accordingly, in some examples, routing devices 104, transcoding device 106, and client device 108 may not need to entropy decode received data to access the active video parameter set ID, but may still process the SEI message containing the vps_id. Because routing devices 104, transcoding device 106, and client device 108 may be able to decode the SEI message without doing a full decode they might also make downstream media distribution choices based on the VPS in the SEI message, without needing to fully decode the bitstream itself.

In accordance with an example of this disclosure video coder may signal an active video parameter set ID using fixed length coding in an SEI message may be performed by a video coder, such as a video encoder 20 or a video decoder 30. In an example system, an SEI message may be transmitted to indicate which VPS is the active at most, once per coder video sequence. In other words, in some examples, the video coder might generate SEI messages that form part of a bit stream. These SEI messages might occur once per IDR picture or once per PLA picture. In other examples, a video coder however, may transmit an SEI message at a different interval.

An example apparatus for coding video data may include one or more processors configured to code an SEI message that contains a vps_id of an active VPS. The vps_id is fixed-length coded. As described herein, an example system may use fixed-length coding such that less complex or less intelligent systems may access the information. For example, by using a fixed-length coding some examples may not need to entropy decode received data to access the active video parameter set ID.

On example may include a video encoder with one or more processors that are configured to encode the SEI message that contains a vps_id of an active VPS. The vps_id is fixed-length coded. The video encoder 20 may be further configured to (1) predict a current block using a determined intra-mode to generate a reference video block, for example, in prediction module 41; (2) determine a residual block comprising a difference between the reference block and the current block, for example, in summer 50; and (3) include the residual block in a bitstream, for example from entropy encoding module 56.

In another example, the apparatus may comprise a video decoder. The video decoder may include one or more processors that are configured to decode the SEI message that contains a vps_id of an active video parameter set (VPS). The vps_id may be fixed-length coded. Additionally, the apparatus may be further configured to (1) obtain, from an encoded bitstream, a residual video block associated with a current block, (2) generate a reference block by predicting the current block using an identified intra-mode for the current block, and (3) determine values for the current block from a combination of the reference block and a received residual video block.

FIG. 5 is a flowchart illustrating an example method in accordance with one or more embodiments of this disclosure. A coder, such as a video encoder 20 or a video decoder 30 codes an SEI message that contains a vps_id of an active VPS (500). For example, in video encoder 20, an encapsulation unit 66, entropy encoding module 56, or other unit might generate an SEI message that contains a vps_id of an active VPS. Accordingly, video encoder 20 encodes an SEI message that contains a vps_id of an active VPS. In another example, video decoder 30 may include a decapsulation unit 94, entropy decoding module 80 or other unit that parses or otherwise processes an SEI message that contains a vps_id of an active VPS. Accordingly, video decoder 30 decodes an SEI message that contains a vps_id of an active VPS. In some examples, MANEs, or other network entities that might not include an entropy decoder might decode an SEI message that contains a vps_id of an active VPS.

The vps_id is fixed-length coded (502). In some examples, the SEI message may contain only the vps_id of the VPS. In other examples, the SEI message consists of the vps_id of the VPS or consists essentially of the vps_id of the VPS. That is, in some examples, the SEI message may include vps_id of the VPS, and little or nothing else.

A source device 12 may transmit the SEI message that contains a vps_id of an active VPS or a destination device may receive the SEI message that contains a vps_id of an active VPS (504). In an example, output interface 22 of source device 12 may transmit the SEI message that contains a vps_id of an active VPS. In another example, input interface 28 of destination device 14 may receive the SEI message that contains a vps_id of an active VPS. Generally, in an example, source device 12 may fixed length encode an SEI message that contains a VPS_ID of an active VPS and then transmit the encoded SEI message. The destination device 14 may then receive the fixed length encoded SEI message and then decoded the received fixed length encoded SEI message.

The SEI NAL unit includes the SEI message. No other SEI messages are included in the SEI NAL unit. SEI NAL units may also be included in all RAP access units of the video data, and may be included in other types of access units.

As discussed herein, in some examples, it may be preferable for a device to have access to the VPS information early in the processing of a bitstream. In accordance with the techniques described herein, a coder might process this information earlier using these techniques. For example, a video encoder might encode the VPS message sooner in instances where it is fixed length and thus, not entropy coded. As another example, a video decoder might be able to complete a decode of a bitstream that includes such information sooner if it is fixed length and thus not entropy decoded. Further, less sophisticated devices, such as a Media Aware Network Element (MANE) may have access to the information without requiring a decoder since the VPS information does not need to be entropy decoded.

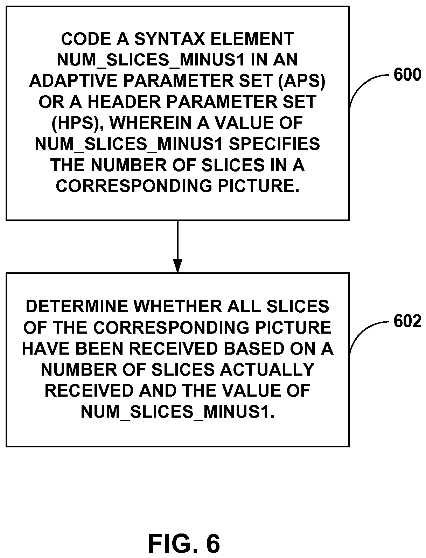

FIG. 6 is a flowchart illustrating another example method in accordance with one or more examples of this disclosure. A video coder such as video encoder 20 or video decoder 30 may code a syntax element num_slices_minus1 in an APS or a header parameter set (HPS), wherein a value of num_slices_minus1 specifies the number of slices in a corresponding picture (600).

In some examples, these functions may be provided by a syntax coding unit, which may be part of encapsulation unit 66 or decapsulation unit 94 or other portions of video decoder 30 or video encoder 20. For example, encapsulation unit 66 within video encoder 20 may encode a syntax element in a syntax encoding unit. The syntax element encoding unit mat encode num_slices_minus1 in an APS or a header parameter set (HPS), wherein a value of num_slices_minus1 specifies the number of slices in a corresponding picture, while a video decoder may code a syntax element num_slices_minus1 in an APS or a header parameter set (HPS). A value of num_slices_minus1 specifies the number of slices in a corresponding picture. In another example, a syntax decoding unit might be used to decode syntax elements. Video decoder 30 may also determine whether all slices of the corresponding picture have been received based on a number of slices actually received and the value of num_slices_minus1 (602). This may be performed, for example, by a comparator that compares the number of slices actually received and the value of num_slices_minus1. In some examples, a value, e.g. "0," for the syntax element indicates that the picture has only one slice. In various examples, the video coder may be a video encoder 20 or video decoder 30. Additionally, a video coder may perform steps 600 and 602 independently from each other in some examples.

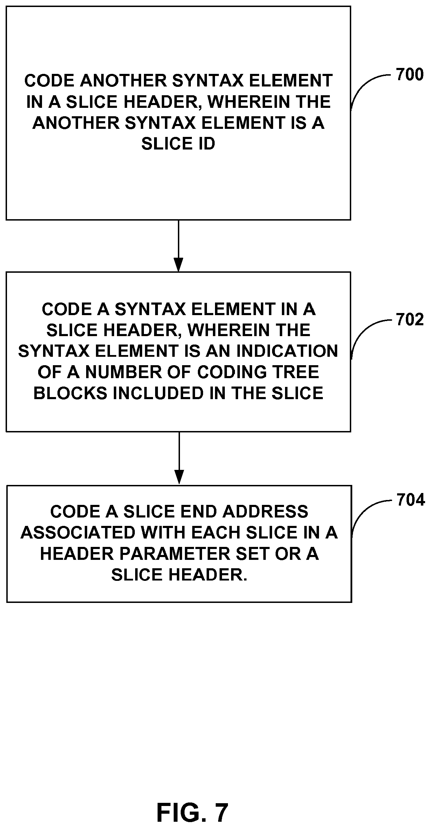

FIG. 7 is another flowchart illustrating an example method in accordance with one or more examples of this disclosure may code another syntax element in a slice header, wherein another syntax element is a slice ID (700). A video coder such as video encoder 20 or video decoder 30 may code a syntax element in a syntax encoding unit within the encoder. The coder may also code a syntax element in a slice header, wherein the syntax element is an indication of a number of coding tree blocks included in the slice (702). In some examples, these functions may be provided by a syntax coding unit, which may be part of encapsulation unit 66 or decapsulation unit 94 or other portions of video encoder 20 or video decoder 30. In some examples, a value, e.g., "0," for the syntax element indicates that the picture has only one slice. The coder may code a slice end address associated with each slice in a header parameter set or a slice header (704). In some examples, these functions may also be provided by a syntax coding unit, such as a syntax encoding unit within encapsulation unit 66 or decapsulation unit 94. The slice end address may be specified in a unit of coding tree blocks in some examples. In some examples, video coder may perform steps 700, 702, and 704 independently from each other in some examples.

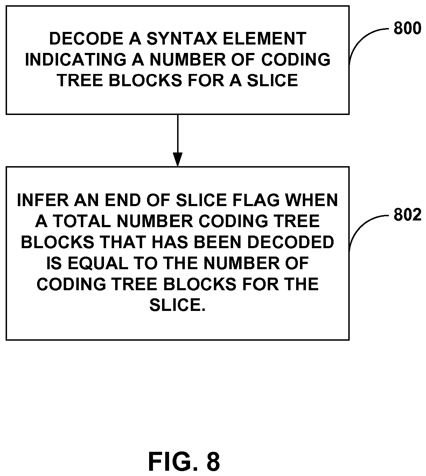

FIG. 8 is another flowchart illustrating an example method in accordance with one or more examples of this disclosure. A coder, such as video encoder 20 or video decoder 30 may decode a syntax element indicating a number of coding tree blocks for a slice (800). In some examples, these functions may be provided by a syntax coding unit, which may be part of encapsulation unit 66 or decapsulation unit 94 or other portions of video decoder 30 or video encoder 20. The coder may infer an end of slice flag when a total number coding tree blocks that has been decoded is equal to the number of coding tree blocks for the slice (802). In some examples, these functions may also be provided by a syntax coding unit, such as a syntax encoding unit which may be part of encapsulation unit 66 or decapsulation unit 94 or other portions of video decoder 30 or video encoder 20. Additionally, in some examples, a video coder may perform steps 800 and 802 independently from each other in some examples.

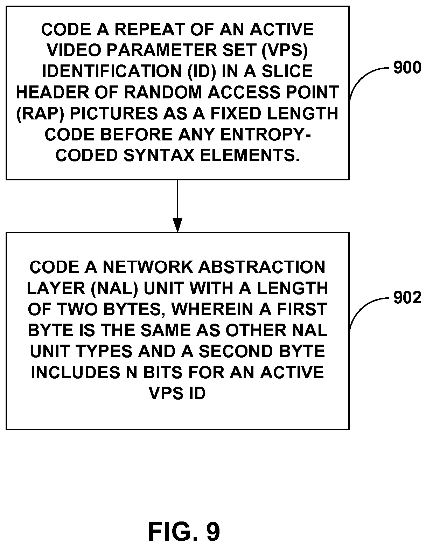

FIG. 9 is another flowchart illustrating an example method in accordance with one or more examples of this disclosure. A coder, such as video encoder 20 or video decoder 30 may code a repeat of an active VPS ID in a slice header of RAP pictures as a fixed length code in the slice header before any entropy-coded syntax elements (900). In some examples, these functions may be provided by a syntax coding unit, which may be part of encapsulation unit 66 or decapsulation unit 94 or other portions of video decoder 30 or video encoder 20. In some examples, these functions may also be provided by a syntax coding unit, such as a syntax encoding unit which may be part of encapsulation unit 66 or decapsulation unit 94 or other portions of video decoder 30 or video encoder 20. The coder may code a NAL unit with a length of two bytes. A first byte may be the same as other NAL unit types currently defined in a high efficiency video coding working draft 7 (HEVC WD7). A second byte may include N bits for an active VPS ID and 8-N reserved bits, wherein a value of 2^N is equal to or greater than a maximum value of an APS ID plus 1 (902). In some examples, these functions may also be provided by a syntax coding unit, such as a syntax encoding unit which may be part of encapsulation unit 66 or decapsulation unit 94 or other portions of video decoder 30 or video encoder 20. In some examples, N is equal to 8, a VPS ID plus 1 is coded in the second byte. In other examples, when N is not equal to 8, the 8-N reserved bits is larger or equal to 1. Additionally, in some examples, steps 900 and 902 may be performed independently from each other in some examples.

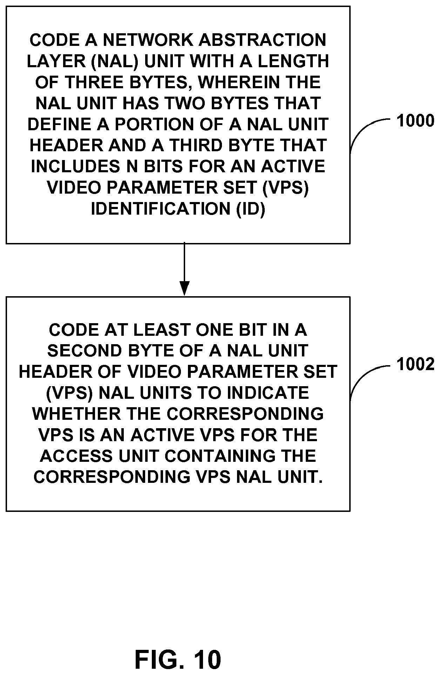

FIG. 10 is another flowchart illustrating an example method in accordance with one or more examples of this disclosure. A coder, such as video encoder 20 or video decoder 30 may code a NAL unit with a length of three bytes. The NAL unit has two bytes that define a portion of a NAL unit header corresponding to a current high efficiency video coding (HEVC) NAL unit and a third byte that includes N bits for an active VPS ID and 8-N reserved bits. A value of 2^N is equal to or greater than a maximum value of an APS ID plus 1 (1000). In some examples, these functions may be provided by a syntax coding unit, which may be part of encapsulation unit 66 or decapsulation unit 94. In an example, N is equal to 8, VPS ID plus 1 is signaled in the second byte. In another example, when N is equal to 8, VPS ID plus 1 is signaled in the third byte. In another example, when N is not equal to 8, the 8-N reserved bits is larger or equal to 1.

A coder, such as video encoder 20 or video decoder 30 may code at least one bit in a second byte of a NAL unit header of VPS NAL units to indicate whether the corresponding VPS is an active VPS for the access unit containing the corresponding VPS NAL unit (1002). In some examples, these functions may also be provided by a syntax coding unit, such as a syntax encoding unit which may be part of encapsulation unit 66 or decapsulation unit 94 or other portions of video decoder 30 or video encoder 20. Additionally, in some examples, a video coder may perform steps 1000 and 1002 independently from each other in some examples.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

In still other examples, this disclosure contemplates a computer readable medium comprising a data structure stored thereon, wherein the data structure includes comprise encoded bitstream that is coded consistent with this disclosure.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. The scope of the invention is defined by the appended claims.

## Claims

1. A method of encoding video data, the method comprising:
encoding a supplemental enhancement information, SEI, message that contains an identifier of an active video parameter set, VPS, (500),
wherein the identifier of the active VPS is fixed-length coded (502),
wherein the identifier of the active VPS is coded as the first syntax element in the SEI message,
wherein the SEI message is included in an SEI network abstraction layer, NAL, unit, and
wherein no other SEI messages are included in the SEI NAL unit.

2. A method of decoding video data, the method comprising:
decoding a supplemental enhancement information, SEI, message that contains an identifier of an active video parameter set, VPS,
wherein the identifier of the active VPS is fixed-length coded,
wherein the identifier of the active VPS is the first syntax element in the SEI message,
wherein the SEI message is included in an SEI network abstraction layer, NAL, unit, and
wherein no other SEI messages are included in the SEI NAL unit.

3. The method of claim 1, further comprising encoding each random access point, RAP, access unit of the video data to include the SEI NAL unit.

4. The method of claim 2, further comprising decoding each random access point, RAP, access unit of the video data to include the SEI NAL unit.

5. The method of any one of the preceding claims, wherein the identifier of the active VPS comprises a vps_id.

6. A computer-readable storage medium comprising instructions that, when executed, cause one or more processors to perform the method of any one of the preceding claims.

7. A device for encoding video data comprising:
means for storing data associated with an active video parameter set, VPS; and
means for encoding a supplemental enhancement information, SEI, message, including an indication of an active video parameter set, VPS, (500),
in the SEI message, wherein the indication of the active VPS is fixed-length coded (502) and coded as the first syntax element in the SEI message,
wherein the SEI message is included in an SEI network abstraction layer, NAL, unit that includes the SEI message, and wherein no other SEI messages are included in the SEI NAL unit.

8. The device of claim 7, further comprising means for encoding each random access point,
RAP, access unit of video data to include the SEI NAL unit.

9. The device of claim 7 or claim 8, wherein the device further comprises:
a camera configured to capture the video data.

10. A device for decoding video data comprising:
means for storing data associated with an active video parameter set, VPS; and
means for decoding a supplemental enhancement information, SEI, message, including an indication of an active video parameter set, VPS, in the SEI message, wherein the indication of the active VPS is fixed-length coded and coded as the first syntax element in the SEI message, wherein the SEI message is included in an SEI network abstraction layer, NAL, unit that includes the SEI message, and wherein no other SEI messages are included in the SEI NAL unit.

11. The device of claim 10, wherein the device further comprises:
a display configured to display the video data.

12. The device of any of claims 9 to 11, wherein the device comprises at least one of:
an integrated circuit;
a microprocessor; or
a wireless communication device.

## Patentansprüche

1. Verfahren zum Encodieren von Videodaten, wobei das Verfahren Folgendes beinhaltet:
Encodieren einer SEI-(Supplemental Enhancement Information)-Nachricht, die eine Kennung eines aktiven Videoparametersatzes (VPS) (500) enthält,
wobei die Kennung des aktiven VPS festlängencodiert (502) ist,
wobei die Kennung des aktiven VPS als das erste Syntaxelement in der SEI-Nachricht codiert ist,
wobei die SEI-Nachricht in einer SEI-NAL-(Network Abstraction Layer)-Einheit enthalten ist, und
wobei keine anderen SEI-Nachrichten in der SEI-NAL-Einheit enthalten sind.

2. Verfahren zum Decodieren von Videodaten, wobei das Verfahren Folgendes beinhaltet:
Decodieren einer SEI-(Supplemental Enhancement Information)-Nachricht, die eine Kennung eines aktiven Videoparametersatzes (VPS) enthält,
wobei die Kennung des aktiven VPS festlängencodiert ist,
wobei die Kennung des aktiven VPS das erste Syntaxelement in der SEI-Nachricht ist,
wobei die SEI-Nachricht in einer SEI-NAL-(Network Abstraction Layer)-Einheit enthalten ist, und
wobei keine anderen SEI-Nachrichten in der SEI-NAL-Einheit enthalten sind.

3. Verfahren nach Anspruch 1, das ferner das Encodieren jeder RAP-(Random Access Point)-Zugriffseinheit der Videodaten beinhaltet, so dass sie die SEI-NAL-Einheit enthält.

4. Verfahren nach Anspruch 2, das ferner das Decodieren jeder RAP-(Random Access Point)-Zugriffseinheit der Videodaten beinhaltet, so dass sie die SEI-NAL-Einheit enthält.

5. Verfahren nach einem der vorherigen Ansprüche, wobei die Kennung des aktiven VPS eine vps_id umfasst.

6. Computerlesbares Speichermedium, das Befehle enthält, die bei Ausführung einen oder mehrere Prozessoren zum Durchführen des Verfahrens nach einem der vorherigen Ansprüche veranlassen.

7. Gerät zum Encodieren von Videodaten, die Folgendes umfasst:
Mittel zum Speichern von mit einem aktiven Videoparametersatz, VPS, assoziierten Daten; und
Mittel zum Encodieren einer SEI-(Supplemental Enhancement Information)-Nachricht, die eine Angabe eines aktiven Videoparametersatzes, VPS, (500) in der SEI-Nachricht enthält, wobei die Angabe des aktiven VPS festlängencodiert (502) und als das erste Syntaxelement in der SEI-Nachricht codiert ist,
wobei die SEI-Nachricht in einer SEI-NAL-(Network Abstraction Layer)-Einheit enthalten ist, die die SEI-Nachricht enthält, und wobei keine anderen SEI-Nachrichten in der SEI-NAL-Einheit enthalten sind.

8. Gerät nach Anspruch 7, das ferner Mittel zum Encodieren jeder RAP-(Random Access Point)-Zugriffseinheit von Videodaten umfasst, so dass sie die SEI-NAL-Einheit enthält.

9. Gerät nach Anspruch 7 oder Anspruch 8, wobei das Gerät ferner Folgendes umfasst:
eine Kamera, die zum Erfassen der Videodaten konfiguriert ist.

10. Gerät zum Decodieren von Videodaten, das Folgendes umfasst:
Mittel zum Speichern von mit einem aktiven Videoparametersatz, VPS, assoziierten Daten; und
Mittel zum Decodieren einer SEI-(Supplemental Enhancement Information)-Nachricht, die eine Angabe eines aktiven Videoparametersatzes, VPS, in der SEI-Nachricht enthält, wobei die Angabe des aktiven VPS festlängencodiert und als das erste Syntaxelement in der SEI-Nachricht codiert ist, wobei die SEI-Nachricht in einer SEI-NAL-(Network Abstraction Layer)-Einheit enthalten ist, die die SEI-Nachricht enthält, und wobei keine anderen SEI-Nachrichten in der SEI-NAL-Einheit enthalten sind.

11. Gerät nach Anspruch 10, wobei das Gerät ferner Folgendes umfasst:
ein zum Anzeigen der Videodaten konfiguriertes Display.

12. Gerät nach einem der Ansprüche 9 bis 11, wobei das Gerät mindestens eines umfasst von:
einer integrierten Schaltung;
einem Mikroprozessor; und
einem drahtlosen Kommunikationsgerät.

## Revendications

1. Procédé de codage de données vidéo, le procédé comprenant :
le codage (500) d'un message d'informations d'amélioration supplémentaires, SEI, qui contient un identifiant d'un ensemble de paramètres vidéo, VPS, actif (500),
dans lequel l'identifiant du VPS actif est codé en longueur fixe (502),
dans lequel l'identifiant du VPS actif est codé comme premier élément de syntaxe dans le message de SEI,
dans lequel le message de SEI est inclus dans une unité de couche d'abstraction de réseau, NAL, de SEI et
dans lequel aucun autre message de SEI n'est inclus dans l'unité de NAL de SEI.

2. Procédé de décodage de données vidéo, le procédé comprenant :
le décodage (500) d'un message d'informations d'amélioration supplémentaires, SEI, qui contient un identifiant d'un ensemble de paramètres vidéo, VPS, actif,
dans lequel l'identifiant du VPS actif est codé en longueur fixe,
dans lequel l'identifiant du VPS actif est le premier élément de syntaxe du message de SEI,
dans lequel le message de SEI est inclus dans une unité de couche d'abstraction de réseau, NAL, de SEI et
dans lequel aucun autre message de SEI n'est inclus dans l'unité de NAL de SEI.

3. Procédé selon la revendication 1, comprenant en outre le codage de chaque unité d'accès de point d'accès aléatoire, RAP, des données vidéo pour inclure l'unité de NAL de SEI.

4. Procédé selon la revendication 2, comprenant en outre le décodage de chaque unité d'accès de point d'accès aléatoire, RAP, des données vidéo pour inclure l'unité de NAL de SEI.

5. Procédé selon l'une quelconque des revendications précédentes, dans lequel l'identifiant du VPS actif comprend un vps_id.

6. Support de stockage lisible par ordinateur comprenant des instructions qui, à leur exécution, amènent un ou plusieurs processeurs à réaliser le procédé selon l'une quelconque des revendications précédentes.

7. Dispositif de codage de données vidéo comprenant :
des moyens de stockage de données associées à un ensemble de paramètres vidéo, VPS, actif ; et
des moyens de codage d'un message d'informations d'amélioration supplémentaires, SEI, comportant une indication d'un ensemble de paramètres vidéo, VPS, actif (500), dans le message de SEI, dans lequel l'indication du VPS actif est codée en longueur fixe (502) et codée comme premier élément de syntaxe dans le message de SEI,
dans lequel le message de SEI est inclus dans une unité de couche d'abstraction de réseau, NAL, de SEI qui comporte le message de SEI, et dans lequel aucun autre message de SEI n'est inclus dans l'unité de NAL de SEI.

8. Dispositif selon la revendication 7, comprenant en outre des moyens de codage de chaque unité d'accès de point d'accès aléatoire, RAP, de données vidéo pour inclure l'unité de NAL de SEI.

9. Dispositif selon la revendication 7 ou la revendication 8, le dispositif comprenant en outre :
une caméra configurée pour capturer les données vidéo.

10. Dispositif de décodage de données vidéo comprenant :
des moyens de stockage de données associées à un ensemble de paramètres vidéo, VPS, actif ; et
des moyens de décodage (800) d'un message d'informations d'amélioration supplémentaires, SEI, comprenant une indication d'un ensemble de paramètres vidéo, VPS, actif dans le message de SEI, dans lequel l'indication du VPS actif est codée en longueur fixe et codée comme premier élément de syntaxe dans le message de SEI, dans lequel le message de SEI est inclus dans une unité de couche d'abstraction de réseau, NAL, de SEI qui comprend le message de SEI et dans lequel aucun autre message de SEI n'est inclus dans l'unité de NAL de SEI.

11. Dispositif selon la revendication 10, le dispositif comprenant en outre :
un afficheur configuré pour afficher les données vidéo.

12. Dispositif selon l'une quelconque des revendications 9 à 11, le dispositif comprenant au moins :
un circuit intégré ;
un microprocesseur ; ou
un appareil de communication sans fil.
